# EUROPÄISCHE PATENTSCHRIFT

(11) **EP 1 762 411 B1**
(45) Veröffentlichungstag und Bekanntmachung des Hinweises auf die Patenterteilung: **07.11.2012**
(21) Anmeldenummer: 06017117.0
(22) Anmeldetag: 17.08.2006
(51) Int. Cl.: B60J 7/20

(54) **Gestängeklappe für ein Cabrioletfahrzeug**
Hood frame cover for a convertible vehicle
Couvercle de cadre pour un véhicule décapotable

(30) Priorität: 09.09.2005 DE 102005043250
(43) Veröffentlichungstag der Anmeldung: 14.03.2007
(73) Patentinhaber: Wilhelm Karmann GmbH, 49084 Osnabrück (DE)
(72) Erfinder: Knöthig, Holger, 49076 Osnabrück (DE); Nietzke, Joachim, 49082 Osnabrück (DE)
(74) Vertreter: Kronthaler, Schmidt & Coll.

(56) Entgegenhaltungen:
- EP-A1- 0 353 203
- DE-C1- 4 232 147
- GB-A- 727 555

## Beschreibung

Die Erfindung betrifft eine Gestängeklappe für ein Cabrioletfahrzeug oder zur Verwendung in einem Cabrioletfahrzeug mit einem flächigen Element, der eigentlichen Klappe oder dem Klappendeckel, und einem Gelenkelement als Klappenmechanik gemäß dem Oberbegriff des Anspruchs 1.

Gestängeklappen sowie deren Verwendung in einem Kraftfahrzeug sind an sich bekannt. Dabei sind einerseits Gestängeklappen bekannt, die aufgrund einer Schwenkbewegung eine Gestängeklappenöffnung freigeben. Andererseits sind auch Gestängeklappen bekannt, bei denen die Gestängeklappenöffnung durch translatorische Bewegung der Gestängeklappe freigegeben wird.

Aus der DE 42 32 147 ist eine Lösung bekannt, bei der beim Schließen des Verdecks ein Gestängeelement die jeweilige Abdeckung gegen die Kraft eines Federelements aus der Schließstellung in einer im Wesentlichen translatorischen Bewegung in eine Offenstellung verlagert.

In der GB 727,555 A ist eine Abdeckung bekannt, mittels welcher ein abgelegtes Verdeck bereichsweise in einem Schacht abdeckbar ist. Die Abdeckung ist über Scharniere an ein rohrförmiges Profil angelenkt und gegenüber diesem verschwenkbar.

Die Erfindung besteht darin, eine in Bezug auf die Klappenmechanik verschleißarme Gestängeklappe, im Folgenden kurz auch nur als "Klappe" bezeichnet, anzugeben, die eine belastbare Anlenkung des flächigen Abschitts an das Gelenkelement gewährleistet und einen wasser- und staubdichten Anschluss des flächigen Abschnitts an das Gelenkelement bildet.

Die Erfindung wird in einer Gestängeklappe mit den Merkmalen des Anspruchs 1 verwirklicht. Dazu ist bei einer Gestängeklappe zur Verwendung in einem Cabrioletfahrzeug, die als Klappendeckel einen flächigen Abschnitt oder ein flächiges Element und als Klappenmechanik ein Gelenkelement aufweist, vorgesehen, dass das Gelenkelement durch einen zumindest stückweise entlang einer Kante des flächigen Abschnitts verlaufenden Schlauch gebildet wird, wobei der flächige Abschnitt mit dem Gelenkelement einstückig verbunden ist. Dies gewährleistet einerseits eine belastbare Anlenkung des flächigen Abschnitts an das Gelenkelement und verhindert andererseits, z.B. bei Verwendung der Klappe in für Spritz-, Regenwasser oder dergleichen erreichbaren Bereichen des Kraftfahrzeugs, einen wasser- und staubdichten Anschluss des flächigen Abschnitts an das Gelenkelement.

Vorteilhafte Ausgestaltungen sind Gegenstand der auf Anspruch 1 rückbezogenen Unteransprüche.

Vorteilhaft ist der flächige Abschnitt als Hartkomponente, insbesondere auf Basis von Thermoplasten, z.B. thermoplastische Duromere, und das Gelenkelement als Weichkomponente, insbesondere auf Basis thermoplastischer Elastomere, ausgeführt. Dies liefert einerseits für die beiden Bestandteile der Klappe, also Deckel und Gelenk, gewünschte Materialeigenschaften, andererseits ermöglichen die genannten Materialien eine effiziente und kostengünstige Produktion.

Wenn das Gelenkelement ein Schlauchprofil aufweist, insbesondere ein Schlauchprofil mit einer von einer elastisch verformbaren Wandung eingeschlossenen, langgestreckten Kammer, ermöglicht dieses Profil die Funktion des an den flächigen Abschnitt angeformten Schlauchs als Gelenk. Beim Verschwenken des Klappenelements wird, im Querschnitt betrachtet, ein Abschnitt der Wandung gestaucht und ein gegenüberliegender Abschnitt der Wandung gedehnt. Die von diesen beiden Abschnitten und dem nachfolgend beschriebenen Übergang einerseits zum Klappendeckel und anderseits zu einem Befestigungsbereich der Klappe eingeschlossene Kammer erleichtert das Stauchen und Dehnen der jeweiligen Profilabschnitte einerseits dadurch, dass kein Vollmaterial gestaucht oder gedehnt werden muss und andererseits dadurch, dass insbesondere der gestauchte Profilabschnitt in Richtung der Kammer, also in Richtung auf das Innere des als Scharnier/Gelenk fungierenden Schlauchprofils ausweichen kann.

Weiter vorteilhaft ist, wie bereits erwähnt, dass an die Wandung des als Gelenk fungierenden Profils ein Übergang zum flächigen Abschnitt, also zum Klappendeckel, angeformt ist. Besonders bevorzugt ist der Übergang zum Klappendeckel oder der Klappendeckel selbst mit diesem Übergang einstückig an die Wandung angeformt.

Weiter bevorzugt ist an die Wandung, insbesondere gegenüberliegend zum Übergang zum flächigen Abschnitt, ein weiterer Übergang zu einem Befestigungsbereich, mit dem die Klappe an der Fahrzeugkarosserie oder an karosseriefesten Teilen oder dergleichen angebracht werden kann, einstückig angeformt.

Die oben beschriebene Klappe lässt sich besonders einfach und effizient herstellen, wenn die Klappe in einem Spritzgießverfahren in einem Arbeitsgang hergestellt wird.

Der Vorteil der Erfindung besteht insbesondere in ihrer einfachen Mechanik, der damit einhergehenden einfachen Herstellbarkeit, der damit wiederum einhergehenden geringen Produktionskosten sowie der günstigen Eigenschaften in Bezug auf Dauerbelastungen und Verschleißarmut.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen
- Fig. 1: ein Cabrioletfahrzeug mit geöffnetem Verdeck und einer dabei sichtbaren Gestängeklappe,
- Fig. 2: eine erfindungsgemäße Klappe in einer Seitenansicht,
- Fig. 3: die erfindungsgemäße Klappe in ihrer Funktion als Gestängeklappe für ein Cabrioletfahrzeug und
- Fig. 4: die Klappe in einer Draufsicht.

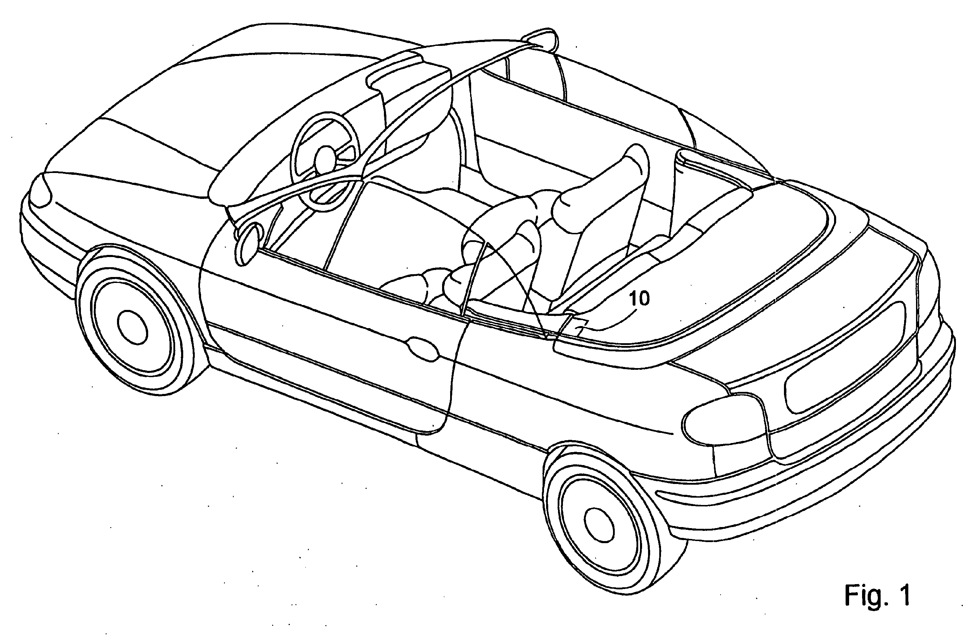

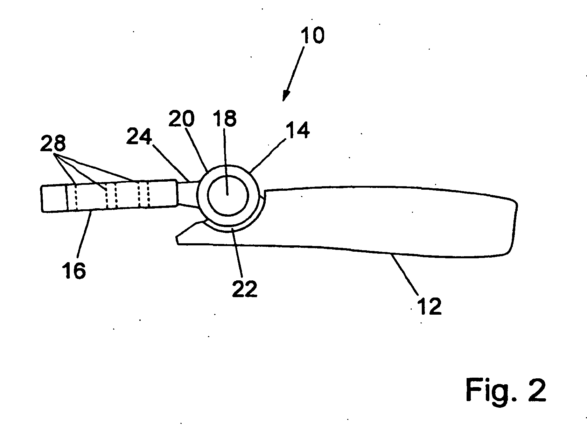

Fig. 1 zeigt ein Cabrioletfahrzeug an sich bekannter Art mit geöffnetem Verdeck. Bei geöffnetem Verdeck sind eine oder mehrere Gestängeklappen 10, die den Durchtritt der Gestängemechanik beim Schließen des Verdecks oder bei geschlossenem Verdeck ermöglichen, auch von außerhalb des Cabrioletfahrzeugs sichtbar. Die Erfindung schlägt insbesondere zur Verwendung als Gestängeklappe 10 die nachfolgend beschriebene Klappe 10 (Fig. 2) vor, wobei im Folgenden entsprechend die Begriffe Klappe 10 und Gestängeklappe 10 synonym verwendet werden.

Fig. 2 zeigt erfindungsgemäße Klappe 10 in einer Seitenansicht. Die Klappe 10 umfasst einen flächigen Abschnitt in Form eines Klappendeckels 12 sowie ein Gelenkelement 14. Im Anschluss an das Gelenkelement 14 läuft die Klappe 10 in der dem Klappendeckel 12 gegenüberliegenden Seite in ein Befestigungselement 16 aus.

In der Seitenansicht ist erkennbar, dass das Gelenkelement 14 ein Schlauchprofil mit einer langgestreckten Kammer 18 und einer elastisch verformbaren Wandung 20 aufweist. Anschließend an die Wandung 20 des Gelenkelements 14 ist ein einstückiger Übergang 22, 24 zum Klappendeckel 12 und zu einem Befestigungsbereich, im dargestellten Ausführungsbeispiel zum Befestigungselement 16, angeformt.

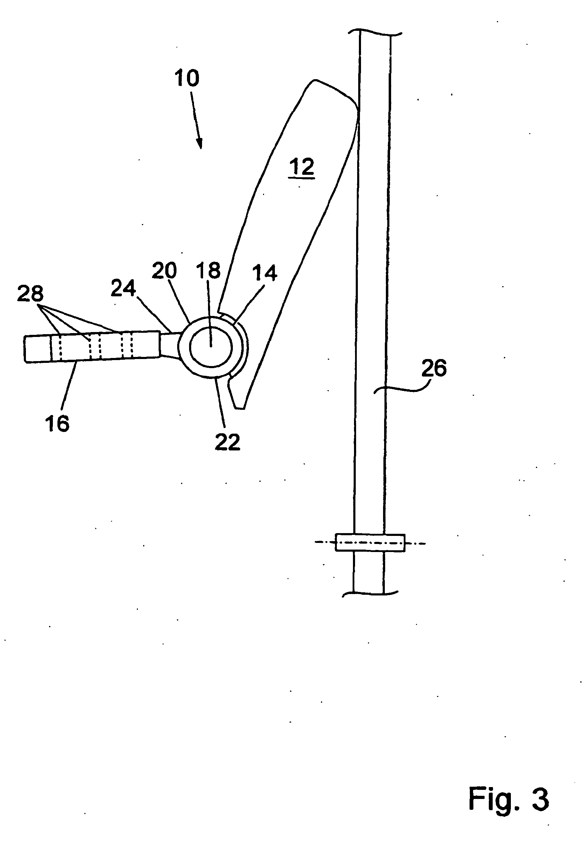

Fig. 3 zeigt in einer schematisch vereinfachten Situation die Klappe 10 in ihrer Funktion als Gestängeklappe für ein Cabrioletfahrzeug. Dabei ist der Klappendeckel 12 durch einen Gestängeschenkel 26, der stellvertretend für unterschiedliche Arten von Gestängeschenkeln, -hebeln oder sonstige Elemente der an sich bekannten Gestängemechanik dargestellt ist, aus seiner im wesentlichen horizontalen unbelasteten Position in eine aufrechte Stellung verschwenkt. Diese Beweglichkeit des Klappendecks 12 ist - wie oben beschrieben - aufgrund der elastischen Verformbarkeit des Gelenkelement 14 möglich.

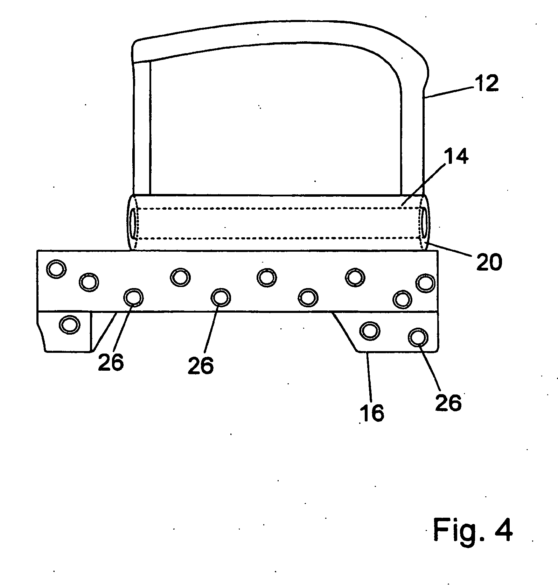

Fig. 4 zeigt die Klappe 10 in einer Draufsicht. Erkennbar ist, dass das Gelenkelement 14, also der als Gelenkelement fungierende Schlauch, (zumindest stückweise) entlang einer Kante des Klappendeckels 12 verläuft. Beim Verschwenken des Klappendeckels 12 erfährt das Gelenkelement 14 in einzelnen Abschnitten seiner Wandung 20 eine Stauchung oder eine Dehnung, die die Beweglichkeit des Klappendeckels 12 ermöglicht. Das Stauchen und Dehnen der Wandungsabschnitte wird dadurch erleichtert, dass das Gelenkelement 14 als Schlauch ausgeführt ist und entsprechend im Innern eine langgestreckte Kammer 18 aufweist, so dass es sich bei den beim Verschwenken des Klappendeckels 12 zu dehnenden oder zu stauchenden Wandungsabschnitten um Hohlzylindersegmente handelt, die im Vergleich etwa mit vollen Zylindersegmenten ein Stauchen oder Dehnen eher zulassen.

In Fig. 2 sind im Befestigungselement 16 eine Anzahl von Bohrungen 28 gezeigt, mittels derer die Klappe 10 z.B. an einem Kraftfahrzeug anbringbar ist.

### Damit lässt sich die Erfindung kurz wie folgt darstellen:

Es wird eine Klappe 10 in einem Kraftfahrzeug oder zur Verwendung in einem Kraftfahrzeug angegeben, die einen flächigen Abschnitt (Klappendeckel 12) und ein Gelenkelement 14 umfasst und die sich dadurch auszeichnet, dass das Gelenkelement 14 durch einen zumindest stückweise entlang einer Kante des flächigen Bereichs 12 verlaufenden Schlauch gebildet wird.

### Bezugszeichenliste

- 10: Klappe
- 12: Klappendeckel
- 14: Gelenkelement
- 16: Befestigungselement
- 18: langgestreckte Kammer
- 20: Wandung
- 22: Übergang
- 24: weiterer Übergang
- 26: Gestängeschenkel
- 28: Bohrung

## Patentansprüche

1. Gestängeklappe (10) in einem Cabrioletfahrzeug mit einem flächigen Abschnitt (12) und einem Gelenkelement (14), wobei das Gelenkelement (14) durch einen zumindest stückweise entlang einer Kante des flächigen Abschnitts (12) verlaufenden Schlauch gebildet wird,
**dadurch gekennzeichnet,**
**dass** der flächige Abschnitt (12) mit dem Gelenkelement (14) einstückig verbunden ist.

2. Gestängeklappe nach Anspruch 1,
wobei der flächige Abschnitt (12) als Hartkomponente, insbesondere auf Basis von Thermoplasten, und das Gelenkelement (14) als Weichkomponente, insbesondere auf Basis thermoplastischer Elastomere, ausgeführt sind.

3. Gestängeklappe nach einem der vorangehenden Ansprüche,
wobei das Gelenkelement (14) ein Schlauchprofil aufweist.

4. Gestängeklappe nach Anspruch 3,
wobei das Gelenkelement (14) eine langgestreckte Kammer (18) mit einer elastisch verformbaren Wandung (20) aufweist.

5. Gestängeklappe nach Anspruch 4,
wobei an die Wandung (20) ein Übergang (22) zum flächigen Abschnitt (12) einstückig angeformt ist.

6. Gestängeklappe nach Anspruch 5,
wobei an die Wandung (20), insbesondere gegenüberliegend zum Übergang (22) zum flächigen Abschnitt (12) ein weiterer Übergang (24) zu einem Befestigungsbereich einstückig angeformt ist.

7. Gestängeklappe nach einem der vorangehenden Ansprüche,
wobei die Gestängeklappe in einem Spritzgießverfahren in einem Arbeitsgang hergestellt wird.

8. Cabrioletfahrzeug mit einer Gestängeklappe nach einem der vorangehenden Ansprüche.

## Claims

1. A hinged linkage lid (10) in a convertible vehicle, comprising a planar portion (12) and a hinge element (14), said hinge element (14) being formed by a flexible tube extending at least partially along an edge of the planar portion (12),
**characterised in that**
the planar portion (12) is integrally connected with the hinge element (14).

2. The hinged linkage lid according to claim 1, wherein the planar portion (12) is provided as a hard component, in particular on the basis of thermoplasts, and the hinge element (14) is provided as a soft component, in particular on the basis of thermoplastic elastomers.

3. The hinged linkage lid according to any one of the preceding claims, wherein the hinge element (14) comprises a flexible tube profile.

4. The hinged linkage lid according to claim 3, wherein the hinge element (14) comprises an elongate chamber (18) with an elastically deformable wall (20).

5. The hinged linkage lid according to claim 4, wherein a passage (22) to the planar portion (12) is integrally shaped on the wall (20).

6. The hinged linkage lid according to claim 5, wherein another passage (24) to an attachment region is integrally shaped on the wall (20), in particular opposite the passage (22) to the planar portion (12).

7. The hinged linkage lid according to any one of the preceding claims, wherein the hinged lid is manufactured in an injection moulding process in a single operation

8. A convertible vehicle comprising a hinged linkage lid according to any one of the preceding claims.

## Revendications

1. Couvercle articulé (10) de tringlerie dans un véhicule cabriolet, comprenant une partie plate (12) et un élément d'articulation (14), ledit élément d'articulation (14) étant constitué par une tube s'étendant au moins partiellement le long d'un bord de la partie plate (12),
**caractérisé en ce que**
la partie plate (12) est reliée d'un seul tenant avec l'élément d'articulation (14).

2. Couvercle articulé de tringlerie selon la revendication 1, dans lequel la partie plate (12) est réalisée en tant que composant dur, notamment à base de thermoplastiques, et l'élément d'articulation (14) est réalisé en tant que composant souple, notamment à base d'élastomères thermoplastiques.

3. Couvercle articulé de tringlerie selon l'une quelconque des revendications précédentes, dans lequel l'élément d'articulation (14) présente un profil tubulaire.

4. Couvercle articulé de tringlerie selon la revendication 3, dans lequel l'élément d'articulation (14) comprend une chambre allongée (18) présentant une paroi (20) déformable de manière élastique.

5. Couvercle articulé de tringlerie selon la revendication 4, dans lequel un passage (22) vers la partie plate (12) est surmoulé d'un seul tenant sur la paroi (20).

6. Couvercle articulé de tringlerie selon la revendication 5, dans lequel un autre passage (24) vers une région de fixation est surmoulé d'un seul tenant sur la paroi (20), notamment en face du passage (22) vers la partie plate (12).

7. Couvercle articulé de tringlerie selon l'une quelconque des revendications précédentes, dans lequel le couvercle articulé est réalisé en une seule opération dans un procédé de moulage par injection.

8. Véhicule cabriolet, comprenant un couvercle articulé de tringlerie selon l'une quelconque des revendications précédentes.
